# EUROPÄISCHE PATENTSCHRIFT

(11) **EP 4 411 274 B1**
(45) Veröffentlichungstag und Bekanntmachung des Hinweises auf die Patenterteilung: **03.09.2025**
(21) Anmeldenummer: 24155700.8
(22) Anmeldetag: 05.02.2024
(51) Int. Cl.: F24S 10/25, F24D 5/10, F24S 10/70, F24S 20/66, F24S 20/70, F24S 10/50, F24S 70/60

(54) **VORRICHTUNG ZUR GEWINNUNG VON WÄRMEENERGIE AUS SONNENLICHT UND ZUR SPEICHERUNG DER WÄRMEENERGIE IN EINEM EXTERNEN WÄRMETRÄGERMEDIUM**
APPARATUS FOR COLLECTING THERMAL ENERGY FROM SUNLIGHT AND STORING THERMAL ENERGY IN AN EXTERNAL HEAT CARRIER MEDIUM
DISPOSITIF POUR OBTENIR DE L'ÉNERGIE THERMIQUE À PARTIR DE LA LUMIÈRE SOLAIRE ET POUR STOCKER L'ÉNERGIE THERMIQUE DANS UN MILIEU CALOPORTEUR EXTERNE

(30) Priorität: 03.02.2023 DE 102023102692
(43) Veröffentlichungstag der Anmeldung: 07.08.2024
(73) Patentinhaber: Wissner, Kirsten, 14469 Potsdam (DE)
(72) Erfinder: Wissner, Kirsten, 14469 Potsdam (DE)
(74) Vertreter: REHBERG HÜPPE + PARTNER

(56) Entgegenhaltungen:
- DE-A1- 102014 013 600
- DE-C1- 19 800 560
- FR-A1- 2 578 312
- US-A- 4 331 503

## Beschreibung

### TECHNISCHES GEBIET DER ERFINDUNG

Die Erfindung bezieht sich auf eine Vorrichtung zur Gewinnung von Wärmeenergie aus Sonnenlicht. Insbesondere bezieht sich die Erfindung auf eine Vorrichtung, die in ihrem aktivierten Zustand die Merkmale des Oberbegriffs des unabhängigen Patentanspruchs 1 aufweist.

Dass die Vorrichtung diese Merkmale in ihrem aktivierten Zustand aufweist, schließt nicht aus, dass die Vorrichtung diese Merkmale in jedem ihrer Zustände aufweist. Die Vorrichtung kann jedoch beispielsweise zusammenlegbar und/oder aufblasbar sein, wobei sie in zusammengelegtem und/oder nicht aufgeblasenem Zustand die Merkmale des Oberbegriffs des unabhängigen Patentanspruchs 1 zumindest nicht sämtlich aufzuweisen braucht.

### STAND DER TECHNIK

Aus der WO 2009 / 024 135 A2 ist ein Sonnenkollektor zur Erwärmung von Luft bekannt, der aus einem isolierten Kollektorgehäuse mit einer durchscheinenden Abdeckscheibe und einer im Kollektorgehäuse angeordneten Absorberplatte besteht. Die Absorberplatte und der Boden des Kollektorgehäuses bilden einen unteren Luftraum mit einem Lufteintritt und einem Luftaustritt aus. Im unteren Luftraum zwischen dem Lufteinritt und dem Luftaustritt sind Strömungswiderstandserzeuger vorhanden, die den Luftstrom über die Breite der Absorberplatte verteilen und verwirbeln. Die Strömungswiderstandserzeuger können im Boden des Kollektorgehäuses eingearbeitete Luftführungskanäle sein. Zwischen der Absorberplatte und der Abdeckscheibe ist ein oberer Luftraum ausgebildet. Zwischen dem unteren Luftraum und dem oberen Luftraum sind mindestens eine Einströmöffnung und mindestens eine Ausströmöffnung vorgesehen, die einen Teilstrom zur Belüftung der Abdeckscheibe ermöglichen. Das Kollektorgehäuse ist wannenartig und gegenüber der Atmosphäre mit einer umfassenden Isolierung geschützt, durch die hindurch der Lufteintritt und der Luftaustritt verlaufen. Der Sonnenkollektor ist in einen Luftkreislauf integriert, zu dem ein Heizelement gehört, das beispielsweise in einem Wohnraum installiert ist. Dabei verbindet eine Luftrückleitung den Sonnenkollektor mit dem Heizelement, während eine Luftzuleitung von dem Heizelement zu dem Sonnenkollektor führt. Diese Luftzuleitung mündet in einen Lüfter, der vorzugweise unmittelbar an den Sonnenkollektor angekoppelt ist. Der Sonnenkollektor befindet sich in der Regel auf dem Dach eines Hauses. Die Gesamtinstallation des Luftkreislaufs mit dem Sonnenkollektor erweist sich als aufwändig und kostspielig.

Aus der DE 20 2005 004 563 U1 ist ein Solarkollektor zur Lufterwärmung mit einem Gehäuse bekannt. Das Gehäuse weist an seiner der Sonne zugewandten Oberseite eine für Solarstrahlung durchlässige Abdeckung auf und ist an seiner von der Sonne abgewandten Unterseite mit einer thermisch isolierenden Schicht versehen. Im Gehäuse ist zwischen der thermisch isolierenden Schicht und der Abdeckung ein Absorber vorgesehen, der aus einem zick-zack-gefalteten Material mit hoher Wärmekapazität besteht, welches sich von einer ersten Seitenwand des Gehäuses zur gegenüberliegenden zweiten Seitenwand des Gehäuses erstreckt. Zwischen der Abdeckung und den durch die Faltung gebildeten Rippen des Absorbers und/oder zwischen der thermisch isolierenden Schicht und den durch die Faltung gebildeten Rippen des Absorbers ist zumindest ein Strömungskanal für zu erwärmende Luft gebildet. Im Bereich einer die erste Seitenwand und die zweiten Seitenwand verbindenden dritte Seitenwand ist an der ersten freien Stirnseite des Absorbers ein Kaltluftsammelraum gebildet. Im Bereich des Kaltluftsammelraums ist zumindest ein Gebläse vorgesehen, welches von außen durch eine Lufteintrittsöffnung in den Kaltluftsammelraum einströmende Luft durch die Strömungskanäle zu zumindest einer Luftaustrittsöffnung fördert. An der der dritten Seitenwand gegenüberliegenden vierten Seitenwand des Gehäuses ist im Bereich der zweiten freien Stirnseite des Absorbers ein Warmluftsammelraum gebildet. Der Absorber ist auf seiner der Sonne zugewandten Seite mit einer Sonnenstrahlung bevorzugt absorbierenden Beschichtung, vorzugsweise einem Solarlack, beschichtet. Im eingebauten betriebsbereiten Zustand ist das Gehäuse so aufgestellt, dass zumindest eine Luftaustrittsöffnung auf einem höheren Niveau liegt als der Kaltluftsammelraum. Photovoltaische Solarzellen sind vorgesehen, um das zumindest eine Gebläse und/oder eine Steuerungseinrichtung des Solarkollektors mit elektrischer Energie zu versorgen. Auch dieser bekannte Solarkollektor wird auf dem Dach eines Gebäudes angeordnet, um Frischluft anzuwärmen, die dann über ein Rohrleitungssystem in das Gebäude eingeleitet wird. Daher ist auch die diesen bekannten Solarkollektor umfassende Gesamtinstallation aufwändig und kostspielig.

Aus der FR 2 578 312 A1 ist eine Vorrichtung zur Gewinnung von Wärmeenergie aus Sonnenlicht mit den Merkmalen des Oberbegriffs des unabhängigen Patentanspruchs 1 bekannt. Die Vorrichtung wird vor einer Gebäudewand angeordnet und nutzt für die Durchströmung ihrer Lichtumwandlungskammer und ihrer Wärmeübertragungskammer den in der Lichtumwandlungskammer auftretenden Kamineffekt und den in der Wärmeübertragungskammer auftretenden inversen Kamineffekt aus. Um eine Auskühlung der Gebäudewand zu verhindern, wenn kein Licht in die Lichtumwandlungskammer eintritt, ist eine Ventilklappe in der Warmgasleitung zwischen der der Lichtumwandlungskammer und der Wärmeübertragungskammer vorgesehen.

Aus der US 11 561 026 B1 ist eine Vorrichtung zur Gewinnung von Wärmeenergie aus Sonnenlicht bekannt, bei der ein Gebläse Luft in einem geschlossenen Kreislauf zirkulieren lässt, welcher sich durch Leitungen auf der Rückseite von in einer Lichtumwandlungskammer oberhalb eines Wärmeisolationskörpers angeordnetem Lichtabsorptionsmaterial und durch Leitungen auf der Rückseite einer Wärmeübertragungswand unterhalb des Wärmeisolationskörpers erstreckt. Das Gebläse wird in Abhängigkeit von den Signalen von Temperatursensoren an dem Lichtabsorptionsmaterial und der Wärmeübertragungswand von einer Steuerung angesteuert und von einem Solarstromgenerator mit elektrischer Energie versorgt.

Aus der AT 505 601 A1 ist ein Sonnenkollektor zum Erwärmen von Wasser in einem Swimmingpool bekannt. Der Sonnenkollektor weist einen Hohlraum zwischen zwei Folienblättern auf. Dabei ist der Hohlraum durch zumindest eine Fläche begrenzt, die Sonnenlicht stark absorbiert. Dadurch wird Wasser in dem Hohlraum erwärmt, dass so in kaltem Zustand in den Hohlraum zufließt und in erwärmtem Zustand aus dem Hohlraum abfließt. Im Bereich der Zuführung des Wassers ist eine Pumpe angebracht. In einer Ausführungsvariante des bekannten Sonnenkollektors ist ein von zu erwärmendem Poolwasser abgeschlossenes Gegenstromsystem ausgebildet, und das im Hohlraum des Kollektors erwärmte Wasser wird über ein Strömungssystem durch das kältere Poolwasser in die Tiefe geleitet. Das Strömungssystem kann wie der Sonnenkollektor ausgebildet sein, bei dem der Hohlraum je nach Anwendung eine mehr oder weniger lange Passage des zu erwärmenden Wassers zwischen den Folien bildet.

Aus der DE 10 2014 013 600 A1 ist ein Solarabsorber mit einer Keramikschaumplatte, die im eingebauten Zustand eine der Sonne zugewandte horizontale Oberfläche, eine gegenüberliegende, im eingebauten Zustand der Sonne abgewandte horizontale Oberfläche und eine umlaufende Seitenfläche aufweist, sowie mit einer Kanalstruktur für ein Wärmetauschermedium in der Oberfläche bekannt. Bei dem Wärmetauschermedium kann es sich um ein Gas handeln. Vorzugsweise und in allen Ausführungsbeispielen der DE 10 2014 013 600 A1 wird indes ein bei der Betriebstemperatur flüssiges Wärmetauschermedium verwendet. In einer Ausführungsform weist eine Calciumsilicatschaumplatte, in deren der Sonne zugewandten Oberfläche eine erste Kanalstruktur verläuft, auf ihrer der Sonne abgewandten Seite eine zweite Kanalstruktur auf. Für die zweite Kanalstruktur ist ein Zulauf vorgesehen, der fluidmäßig mit einem Ablauf der ersten Kanalstruktur verbunden ist, so dass das erwärmte Wärmetauschermedium von der ersten Kanalstruktur in die zweite Kanalstruktur geleitet werden kann. Für die zweite Kanalstruktur ist ein Ablauf vorgesehen, durch den das nunmehr abgekühlte Wärmetauschermedium von der zweiten Kanalstruktur über einen Zulauf wieder zurück in die erste Kanalstruktur zurückgeleitet werden kann. So ergibt sich ein von einer externen Pumpe angetriebener geschlossener Flüssigkeitskreislauf. Die Oberfläche der zweiten Kanalstruktur ist haftfest mit einem Träger aus Kork verbunden.

Aus der DE 198 00 560 C1 ist ein Solarflachkollektor zur Erhitzung von Luft oder anderen gasförmigen Fluiden bekannt. Der Solarflachkollektor ist mit wenigstens zwei transparenten Abdeckscheiben ausgerüstet. Eine Geometrie von Strömungskanälen, die aus der innersten Abdeckscheibe und einem die Solarstrahlung absorbierenden profilierten Blech gebildet sind, ist so gewählt, dass die Kanäle vollturbulent durchströmt werden. Indes wird der Raum zwischen den beiden äußeren Abdeckscheiben laminar durchströmt.

Aus der US 4 331 503 A ist ein Solarkollektorpaneel bekannt, bei dem Kanäle in einer Oberfläche unregelmäßige Oberflächen aufweisen. Wenn Luft oder ein anderes Gas als Wärmetransferfluid verwendet wird, erzeugen die unregelmäßigen Oberflächen der Kanäle Turbulenz, was in einer verbesserten Effizienz der Wärmeübertragung resultiert. Die Unregelmäßigkeit der Oberfläche der Kanäle verbessert auch die Absorption von Sonnenlicht.

### AUFGABE DER ERFINDUNG

Der Erfindung liegt die Aufgabe zugrunde, eine Vorrichtung zur Gewinnung von Wärmeenergie aus Sonnenlicht mit den Merkmalen des Oberbegriffs des unabhängigen Patentanspruchs 1 aufzuzeigen, die kostengünstig bereitstellbar und einsetzbar ist, um die gewonnene Wärmeenergie in einem externen Wärmeträgermedium zu speichern.

### LÖSUNG

Die Aufgabe der Erfindung wird durch eine Vorrichtung mit den Merkmalen des unabhängigen Patentanspruchs 1 gelöst. Bevorzugte Ausführungsformen der erfindungsgemäßen Vorrichtung sind in den abhängigen Patentansprüchen definiert. Dabei betrifft Patentanspruch 15 eine bevorzugte Verwendung der erfindungsgemäßen Vorrichtung.

### BESCHREIBUNG DER ERFINDUNG

Eine erfindungsgemäße Vorrichtung zur Gewinnung von Wärmeenergie aus Sonnenlicht und zur Speicherung der Wärmeenergie in einem externen Wärmeträgermedium weist in ihrem aktivierten Zustand einen flächigen Wärmeisolationskörper, eine zwischen einem Lichteintrittsfenster und einer Außenseite des flächigen Wärmeisolationskörpers ausgebildete Lichtumwandlungskammer, in der ein Lichtabsorptionsmaterial angeordnet ist, und eine Gasführungseinrichtung für ein Wärmeübertragungsgas auf, die eine in die Lichtumwandlungskammer einmündende Kaltgasleitung und eine aus der Lichtumwandlungskammer ausmündende Warmgasleitung umfasst. Das Lichtabsorptionsmaterial wandelt Sonnenlicht, welches durch das Lichteintrittsfenster in die Lichtumwandlungskammer eintritt, in Wärmeenergie um. Das Wärmeübertragungsgas in der Lichtumwandlungskammer nimmt die Wärmeenergie von den Lichtabsorptionsmaterial auf. Die Kaltgasleitung und die Warmgasleitung erstrecken sich durch den flächigen Wärmeisolationskörper oder an diesem vorbei. Auf der Innenseite des flächigen Wärmeisolationskörpers ist eine Wärmeübertragungskammer zwischen die Warmgasleitung und die Kaltgasleitung geschaltet und dort direkt an das externe Wärmeträgermedium anschließbar. Das Wärmeübertragungsgas in der Wärmeübertragungskammer gibt Wärmeenergie direkt, d. h. nicht über eine Wärmeübertragungswand an das Wärmeträgermedium ab. Der Wärmeisolationskörper der erfindungsgemäßen Vorrichtung isoliert das Wärmeträgermedium thermisch nach außen.

Bei dem Wärmeübertragungsgas, das in der erfindungsgemäßen Vorrichtung durch die Gasführungseinrichtung zirkuliert, kann es sich um Luft, insbesondere um Luft aus der Umgebung der Vorrichtung handeln. Grundsätzlich kann es sich aber auch um ein Gas anderer Zusammensetzung als Luft aus der Umgebung handeln.

Bei dem externen Wärmeträgermedium, an das die Wärmeübertragungskammer der erfindungsgemäßen Vorrichtung anschließbar ist, handelt es sich um ein festes Wärmeträgermedium. Dieses Wärmeträgermedium weist regelmäßig eine sehr viel höhere Wärmekapazität als das in der erfindungsgemäßen Vorrichtung zwischen der Lichtumwandlungskammer und der Wärmeübertragungskammer zirkulierende Wärmeübertragungsgas auf. Auch deshalb ist der energetische Wirkungsgrad der erfindungsgemäßen Vorrichtung berechnet als Quotient der auf das Wärmeträgermedium übertragenen Wärmeenergie geteilt durch Energie des auf die Vorrichtung einfallenden Sonnenlichts begrenzt. Bezogen auf die Masse, den Installationsaufwand und die Kosten der erfindungsgemäßen Vorrichtung ergibt sich jedoch ein hoher Wirkungsgrad. Anders gesagt erlaubt es die erfindungsgemäße Vorrichtung, erhebliche Mengen an Solarenergie mit geringem Aufwand nutzbar zu machen, so dass ihr nicht besonders hoher energetischer Wirkungsgrad zweitrangig ist.

Ein weiterer grundsätzlicher Vorteil der erfindungsgemäßen Vorrichtung ist, dass sie beziehungsweise ihr Wärmeisolationskörper das mit ihrer Hilfe erwärmte Wärmeträgermedium thermisch isoliert. Dadurch wird verhindert, dass die mit der erfindungsgemäßen Vorrichtung gewonnene und an das Wärmeträgermedium abgegebene Wärmeenergie schnell wieder verloren geht.

Der hier verwendete Begriff des Wärmeträgermediums soll nicht implizieren, dass die an das Wärmeträgermedium abgegebene Wärmeenergie mit Hilfe des Wärmeträgermediums abtransportiert wird, um sie anderen Orts zu nutzen. Ganz im Gegenteil kommt die erfindungsgemäße Vorrichtung mit dem Ziel zum Einsatz, das Wärmeträgermedium als solches aufzuwärmen, um es in diesem aufgewärmten Zustand zu nutzen. In einem konkreten Anwendungsfall kann es sich bei dem Wärmeträgermedium um einen Teil einer Gebäudewand handeln, die mit der erfindungsgemäßen Vorrichtung thermisch isoliert wird und unter der thermischen Isolierung mit aus Sonnenlicht gewonnener Wärmeenergie erwärmt wird.

Die erfindungsgemäße Vorrichtung weist in ihrem aktivierten Zustand einen Wärmeisolationsrand auf, der den flächigen Wärmeisolationskörper, die Lichtumwandlungskammer, die Kaltgasleitung und die Warmgasleitung seitlich einfasst. In Bezug auf die eingefassten Bestandteile der Vorrichtung ist die von der erfindungsgemäßen Vorrichtung bewirkte thermische Isolierung nicht nur quer zu, sondern auch in Richtung ihrer Haupterstreckungsebene gegeben. Zusätzlich kann die erfindungsgemäße Vorrichtung seitlich benachbart zu weiteren erfindungsgemäßen Vorrichtungen oder einer externen thermischen Isolierung angeordnet werden. Bei einer großflächigen Erstreckung der erfindungsgemäßen Vorrichtung kann überdies eine schlechtere thermische Isolierung an ihrem Seitenrand hingenommen werden, weil sich deren relative Auswirkung in Grenzen hält.

In dem aktivierten Zustand der erfindungsgemäßen Vorrichtung fasst der Wärmeisolationsrand auch die Wärmeübertragungskammer seitlich ein, die sich großflächig auf der Rückseite des Wärmeisolationskörpers erstreckt.

Der Wärmeisolationsrand ist in dem aktivierten Zustand der erfindungsgemäßen Vorrichtung dazu ausgebildet, an einer Oberfläche von festem Wärmeträgermedium an- oder aufzuliegen. Bei diesem festen Wärmeträgermedium kann es sich um die schon erwähnte Gebäudewand oder auch einen Fußboden im Außenbereich handeln, der nach Entfernen der erfindungsgemäßen Vorrichtung die auf ihn übertragene Wärmeenergie nach Art einer Fußbodenheizung abgeben kann.

Bei der erfindungsgemäßen Vorrichtung ist die Wärmeübertragungskammer, wie bereits angedeutet wurde, großflächig ausgebildet, und dabei erstreckt sie sich parallel zur Rückseite des Isolationskörpers. Dabei ist die Wärmeübertragungskammer zu dem Wärmeträgermedium hin offen sein, das heißt auf dieser Seite durch das Wärmeträgermedium selbst begrenzt.

Als vorteilhaft erweist es sich, wenn der Wärmeisolationskörper, das Lichteintrittsfenster, die Lichtumwandlungskammer, die Gasführungseinrichtung und die Wärmeübertragungskammer als Einheit verschwenkbar an einem Lagersockel der erfindungsgemäßen Vorrichtung gelagert sind. Auf diese Weise kann die Wärmeübertragungskammer, gegebenenfalls zusammen mit der Wärmeübertragungswand, von dem Wärmeträgermedium weggeschwenkt werden. Auf diese Weise kann dann, wenn das Wärmeträgermedium Wasser eines Schwimmbads oder Whirlpools ist, die Wasserfläche für die Benutzung des Schwimmbads oder Whirlpools freigemacht werden. In dieser Ausführungsform der erfindungsgemäßen Vorrichtung kann sie auch als Fenster- oder Türladen dienen, um vorübergehend ein Fenster oder eine Tür abzudecken. Dies ist insbesondere dann vorteilhaft, wenn das Fenster als solches beziehungsweise die Tür als solche schlecht thermisch isoliert ist.

Bei der erfindungsgemäßen Vorrichtung kann der Wärmeisolationskörper, und soweit vorhanden auch der Wärmeisolationsrand, beispielsweise mit formstabilen Schäumen und/oder mit geschlossenen Gaskammern mit formstabilen Kammerwänden, aber auch mit aufblasbaren Hohlkörpern nach Art einer Luftmatratze ausgebildet sein.

Zwischen der Lichtumwandlungskammer und der Wärmeübertragungskammer weist der Wärmeisolationskörper der erfindungsgemäßen Vorrichtung eine Isolationsdicke auf, die ausreichend groß ist, um seine Funktion zu erfüllen. Je nach Anordnung und Füllung von Hohlräumen des Wärmeisolationskörpers beträgt die Isolationsdicke allermindestens 0,5 cm und in der Regel mindestens 1 cm. Vorzugsweise beträgt sie mindestens 3 cm und noch mehr bevorzugt mindestens 5 cm. Selten wird die Isolationsdicke 10 cm überschreiten, noch seltener 15 cm, weil sich hierdurch der Aufwand für die Herstellung und Verwendung der erfindungsgemäßen Vorrichtung erhöht, ohne dass sich ein messbarer zusätzlicher Nutzen ergibt.

Ein hoher zusätzlicher Nutzen ergibt sich jedoch dann, wenn in der Kaltgasleitung und/oder der Warmgasleitung eine Ventilklappe angeordnet ist. Die Ventilklappe kann manuell betätigbar sein. Für die Betätigung der Ventilklappe kann die Vorrichtung einen Aktuator, beispielsweise einen Elektromotor, und eine elektronische Steuerung, die den Aktuator zeit- und/oder temperaturabhängig ansteuert, aufweisen. Vorzugsweise handelt es sich bei der Ventilklappe um eine mechanisch temperaturgesteuerte Ventilklappe. Unter einer mechanisch temperaturgesteuerten Ventilklappe ist beispielsweise eine Ventilklappe zu verstehen, die durch ein Bimetallelement geöffnet wird, wenn dieses Bimetallelement eine bestimmte Temperatur erreicht hat. So kann die jeweilige Kaltgas- oder Warmgasleitung dann geöffnet werden, wenn in der Lichtumwandlungskammer bereits eine bestimmte Temperatur erreicht ist, bei der Wärmeenergie zur Übertragung auf das Wärmeträgermedium verfügbar ist. Umgekehrt kann eine solche Ventilklappe auch von der Temperatur des Wärmeträgermediums gesteuert werden und die jeweilige Kaltgas- beziehungsweise Warmgasleitung schließen, wenn die Temperatur des Wärmeträgermedium einen oberen Grenzwert erreicht hat, der nicht überschritten werden soll.

In der Kaltgasleitung und/oder der Warmgasleitung ist ein Gebläse angeordnet, das das Wärmeübertragungsgas aktiv durch die Gasführungseinrichtung umwälzt. Für die Versorgung des Gebläses mit elektrischer Energie kann die Vorrichtung eine Batterie oder einen Akkumulator umfassen. Vorzugsweise wird ein vorhandenes Gebläse durch einen Solarstromgenerator mit elektrischer Energie versorgt. Dabei kann die Versorgung so abgestimmt sein, dass der Solarstromgenerator genau dann ausreichend Energie zum Betrieb des Gebläses bereitstellt, wenn so viel Sonnenlicht auf ihn und in die Lichtumwandlungskammer einfällt, dass in der Lichtumwandlungskammer ausreichend Wärmeenergie zum Übertragen auf das Wärmeträgermedium anfällt.

In der Lichtumwandlungskammer der erfindungsgemäßen Vorrichtung sind Strömungslenkeinrichtungen angeordnet sein, die den Strömungsweg zwischen der Kaltgasleitung und der Warmgasleitung verlängern und damit bei gleicher Verweildauer in der Lichtumwandlungskammer die Strömungsgeschwindigkeit des Wärmeübertragungsgases in der Lichtumwandlungskammer verlängern. Dadurch reduziert sich die Dicke laminarer Grenzschichten des Wärmeübertragungsgases an dem Lichtabsorptionsmaterial, die den Übergang der Wärmeenergie von dem Lichtabsorptionsmaterial auf das Wärmeübertragungsgas behindern. Die Strömungslenkeinrichtungen können beispielsweise dazu ausgebildet sein, die Lichtumwandlungskammer derart längs des Wärmeisolationskörpers und/oder quer dazu zu unterteilen, dass der verlängerte Strömungsweg über die Außenseite des Wärmeisolationskörpers mäandert oder spiralförmig von der Kaltgasleitung an dem Wärmeisolationsrand zu der zentral angeordneten Warmgasleitung verläuft.

Das Lichteintrittsfenster kann in dem aktivierten Zustand der erfindungsgemäßen Vorrichtung mehrere parallel zueinander ausgerichtete und in Richtung quer zu dem Wärmeisolationskörper voneinander beabstandete Schichten aufweisen. Hiermit kann eine thermische Isolation der Lichtumwandlungskammern nach außen erreicht werden. Die Schichten können unabhängig voneinander aus transparentem Kunststoff oder Glas ausgebildet sein. Aus transparentem Kunststoff ausgebildete Schichten können unabhängig voneinander formstabile Platten oder flexible Folien sein.

In einer Ausführungsform der erfindungsgemäßen Vorrichtung mit einem mehrere voneinander beabstandete Schichten aufweisenden Lichteintrittsfenster mündet die Kaltgasleitung über einen zwischen zwei der Schichten verbleibenden ersten Freiraum in die Lichtumwandlungskammer ein. Dabei kann die Kaltgasleitung über einen zwischen zwei der Schichten verbleibenden zweiten Freiraum, der räumlich zwischen dem ersten Freiraum und der Lichtumwandlungskammer angeordnet ist, von dem ersten Freiraum in die Lichtumwandlungskammer einmünden. So wird das Wärmeübertragungsgas sukzessive auf die Temperatur in der Wärmeübertragungskammer erwärmt und es werden große Temperatursprünge über das Lichteintrittsfenster hinweg vermieden.

Bei der erfindungsgemäßen Vorrichtung kann ein Abdeckelement vorhanden sein, mit dem das Lichteintrittsfenster zumindest teilweise abdeck- oder verschließbar ist. Bei starkem Einfall von Sonnenlicht kann die Temperatur des Lichtabsorptionsmaterials in der Lichtumwandlungskammer und damit die Temperatur in der Lichtumwandlungskammer Werte erreichen, die die Integrität der erfindungsgemäßen Vorrichtung gefährden können. Um dies zu vermeiden, kann das Lichteintrittsfenster zumindest teilweise mit dem Abdeckelement abgedeckt oder verschlossen und dadurch die in die Lichtumwandlungskammer gelangende Menge an Sonnenlicht reduziert werden. Dabei kann das Abdeckelement derart mechanisch temperaturgesteuert sein, dass es beim Erreichen einer Grenztemperatur in der Lichtumwandlungskammer zum Abdecken oder Verschließen des Lichteintrittsfensters aktiviert wird.

In der Lichtumwandlungskammer der erfindungsgemäßen Vorrichtung können überströmbare Oberflächenstrukturen oder durchströmbare Strukturkörper angeordnet sein, die das Lichtabsorptionsmaterial an ihren Oberflächen aufweisen und die das überströmende oder durchströmende Wärmeübertragungsgas durchmischen, um die Rate, mit der die Wärmeenergie von dem Lichtabsorptionsmaterial auf das Wärmeübertragungsgas übertragen wird, zu erhöhen. Auch diese Durchmischung wird durch eine hohe Strömungsgeschwindigkeit des Wärmeübertragungsgases durch die Lichtumwandlungskammer gefördert.

Wenn einander benachbarte Oberflächen der überströmbaren Oberflächenstrukturen oder durchströmbaren Strukturkörper in der Lichtumwandlungskammer unter Winkeln von ≤ 90° zueinander ausgerichtet sind, bleibt der Anteil des auch von realen schwarzen Oberflächen reflektierten Sonnenlichts, der zurück auf das Lichteintrittsfenster gerichtet wird, unabhängig von dem Einfallswinkel des Sonnenlichts in die Lichtumwandlungskammer sehr klein. Dies gilt auch für diffus reflektierende Oberflächen des Lichtabsorptionsmaterials.

Auch in der Wärmeübertragungskammer können Strömungslenkeinrichtungen angeordnet sein, die den über das Wärmeträgermedium oder die Wärmeübertragungswand führenden Strömungsweg zwischen der Kaltgasleitung verlängern. Dadurch wird bei gleiche Verweildauer die Strömungsgeschwindigkeit des Wärmeübertragungsgases durch in der Wärmeübertragungskammer und damit aus den oben zu der Lichtumwandlungskammer ausgeführten Gründen die Übertragung der Wärmeenergie von dem Wärmeübertragungsgas auf das Wärmeträgermedium erhöht.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Wärmeisolationskörper die Rede ist, ist dies so zu verstehen, dass genau ein Wärmeisolationskörper, zwei Wärmeisolationskörper oder mehr Wärmeisolationskörper vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen vertikalen Schnitt durch eine erste Ausführungsform der erfindungsgemäßen Vorrichtung.
- **Fig. 2**: zeigt einen horizontalen Schnitt durch die Ausführungsform der Vorrichtung gemäß Fig. 1.
- **Fig. 3**: zeigt einen horizontalen Schnitt durch eine zweite Ausführungsform der erfindungsgemäßen Vorrichtung.
- **Fig. 4**: zeigt drei verschiedene Ausgestaltungen von Strömungslenkeinrichtungen in einer Lichtumwandlungskammer der erfindungsmäßen Vorrichtung.
- **Fig. 5**: zeigt drei verschiedene Ausgestaltungen von überströmbaren Oberflächenstrukturen in der Lichtumwandlungskammer der erfindungsgemäßen Vorrichtung.
- **Fig. 6**: ist eine Prinzipdarstellung einer weiteren Ausführungsform der erfindungsgemäßen Vorrichtung.
- **Fig. 7**: zeigt einen vertikalen Schnitt durch eine weitere Ausführungsform der erfindungsgemäßen Vorrichtung beim Erwärmen einer Gebäudewand.
- **Fig. 8**: zeigt die Anordnung mehrerer erfindungsgemäßer Vorrichtungen an einer Gebäudewand; und
- **Fig. 9**: zeigt einen vertikalen Schnitt durch noch eine weitere Ausführungsform der erfindungsgemäßen Vorrichtung, die vor einem Fenster in einer Gebäudewand angeordnet ist.

### FIGURENBESCHREIBUNG

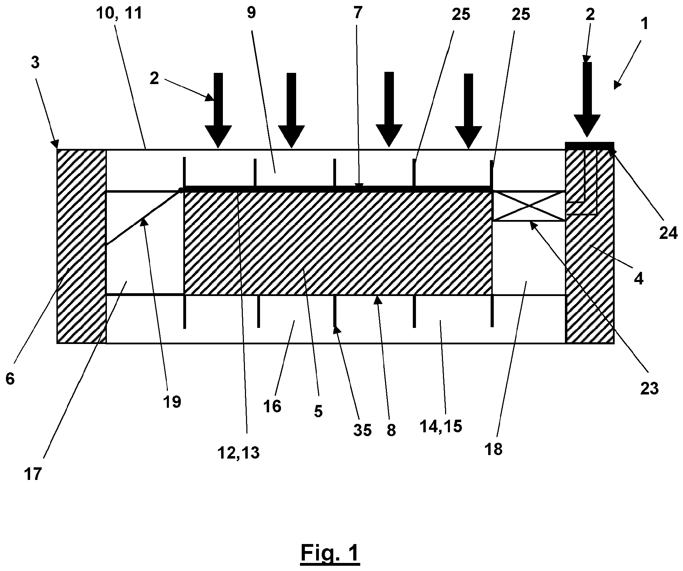

Die in **Fig. 1** dargestellte Vorrichtung 1 dient zur Gewinnung von Wärmeenergie aus Sonnenlicht 2. Die Vorrichtung 1 gemäß Fig. 1 weist einen Formkörper 3 aus einem leichten, thermisch isolierenden Hartschaum 4 auf. Der Formkörper 3 bildet einen flächigen Wärmeisolationskörper 5 und einen den Wärmeisolationskörper 5 einfassenden Wärmeisolationsrand 6 aus. Der Wärmeisolationsrand 6 steht sowohl an einer Außenseite 7 als auch an einer Innenseite 8 quer zu der Haupterstreckungsebene des Wärmeisolationskörpers 5 über diesen über. Oberhalb der Außenseite 7 des Wärmeisolationskörpers ist eine Lichtumwandlungskammer 9 ausgebildet, in der das Sonnenlicht 2 in die Wärmeenergie umgewandelt wird. Das Sonnenlicht 2 tritt durch ein Lichteintrittsfenster 10, das beispielsweise durch eine Plexiglasscheibe 11 ausgebildet sein kann, in die Lichteintrittskammer 9 ein. Das Lichteintrittsfenster 10 ist seitlich von dem Wärmeisolationsrand 6 eingefasst und die Plexiglasscheibe 21 liegt an dem Wärmeisolationsrand 6 an. In der Lichtumwandlungskammer 9 trifft das Sonnenlicht 2 auf Lichtabsorptionsmaterial 12 und wird von diesem in die Wärmeenergie umgewandelt. Das Lichtabsorptionsmaterial 12 ist hier eine Beschichtung der Außenseite 7 des Wärmeisolationskörpers 5 mit sogenanntem Solarlack 13. Von dem Lichtabsorptionsmaterial 12 wird die Wärmeenergie auf ein Wärmeübertragungsgas 14, bei dem es sich hier um Luft 15 handelt, übertragen. Das Wärmeübertragungsgas 14 wird von einer Gasführungseinrichtung durch die Lichtumwandlungskammer 9 und eine Wärmeübertragungskammer 16 an der Innenseite 8 des Wärmeisolationskörpers 5 im Kreis geführt. Dabei tritt das Wärmeübertragungsgas durch eine Kaltgasleitung 17 aus der Wärmeübertragungskammer 16 in die Lichtumwandlungskammer 9 und durch eine Warmgasleitung 18 aus der Lichtumwandlungskammer 9 in die Wärmeübertragungskammer 16 über. In der Kaltgasleitung 17 ist eine temperaturgesteuerte Ventilklappe 19 angeordnet, die die Zirkulation des Wärmeübertragungsgases 14 verhindert, bis die Temperatur in der Lichtumwandlungskammer 9 und damit auch ihre eigene Temperatur eine Mindesttemperatur überschreitet. Bei geschlossener Ventilklappe 19 isoliert der Wärmeisolationskörper 5 die Wärmeübertragungskammer 16 nach außen. In der Wärmeübertragungskammer 16 wird die Wärmeenergie von dem Wärmeübertragungsgas 15 auf ein externes Wärmeträgermedium 20 übertragen.

Die Gasführungseinrichtung weist ein Gebläse 23 auf, das bei der Ausführungsform der erfindungsgemäßen Vorrichtung 1 gemäß **Fig. 1** in der Kaltgasleitung 18 angeordnet ist. Das Gebläse 23 wird von einem hier nicht separat dargestellten Elektromotor angetrieben, der von einem Solarstromgenerator 24 mit elektrischer Energie versorgt wird. Der Solarstromgenerator 24 stellt genau dann elektrische Energie für den Antrieb des Gebläses 23 bereit, wenn Sonnenlicht 2 auf die Vorrichtung 1 einschließlich des Solarstromgenerators 24 fällt und entsprechend Sonnenlicht 2 in der Lichtumwandlungskammer 9 in Wärmeenergie umgewandelt wird. Wenn hingegen kein Sonnenlicht 2 auf den Solarstromgenerator 24 fällt, steht das Gebläse 23 still und es kann zudem mit hier nicht dargestellten Verschlussklappen versehen sein, die sich erst bei laufendem Gebläse 23 öffnen. Da gemäß Fig. 1 zudem in der Kaltgasleitung 17 die mechanisch temperaturgesteuerte Ventilklappe 19 angeordnet ist, ist die Wärmeübertragungskammer 16 auf der Innenseite 8 von der Lichtumwandlungskammer 9 auf der Außenseite 7 des Wärmeisolationskörpers 5 bei Dunkelheit weitgehend getrennt und entsprechend thermisch isoliert. Fig. 1 zeigt überdies, dass in der Lichtumwandlungskammer 9 Strömungslenkeinrichtungen 25 angeordnet sind, die von der Außenseite 7 des Wärmeisolationskörpers 5 zu dem Lichteintrittsfenster 10 hin abstehen. In der Wärmeübertragungskammer 16 angeordnete Strömungslenkeinrichtungen 35 stehen von der Innenseite 8 des Wärmeisolationskörpers 5 zu der offenen Seite der Wärmeübertragungskammer 16 hin ab.

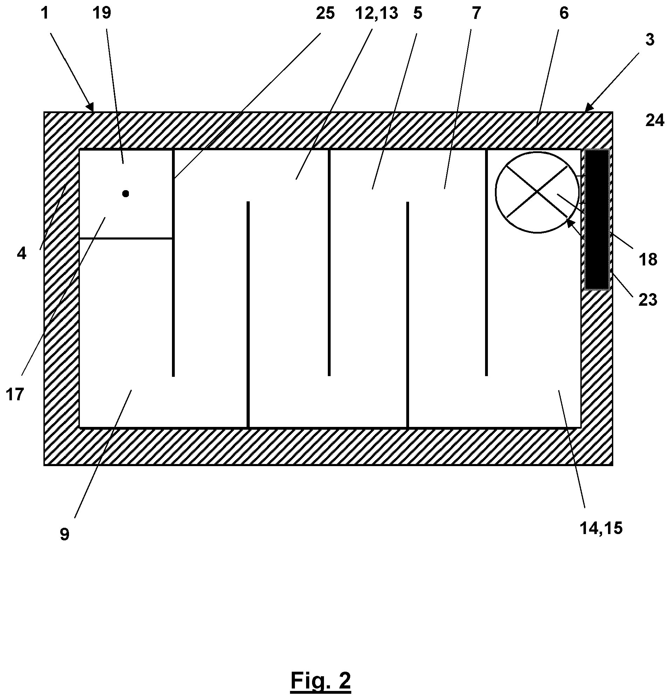

**Fig. 2** zeigt die Strömungslenkeinrichtungen 25 gemäß Fig. 1 in einem horizontalen Schnitt durch die Vorrichtung 1 mit Blickrichtung auf die Außenseite 7 des Wärmeisolationskörpers 5. Die Strömungslenkeinrichtungen 25 verlängern den Strömungsweg zwischen der Kaltgasleitung 17 und der Warmgasleitung 18 durch die Lichtumwandlungskammer 9 und erhöhen damit die Strömungsgeschwindigkeit des Wärmeübertragungsgases 14 durch die Lichtumwandlungskammer 9 über das Lichtabsorptionsmaterial 12 hinweg. Dadurch reduzieren sich als thermische Isolierung wirkende laminare Grenzschichten des Wärmeübertragungsgases 14 und erhöht sich die Verwirbelung des Wärmeübertragungsgases 14 in der Lichtumwandlungskammer 9, so dass die Übertragungsrate der Wärmeenergie von dem Lichtabsorptionsmaterial 12 auf das Wärmeübertragungsgas 14 ansteigt.

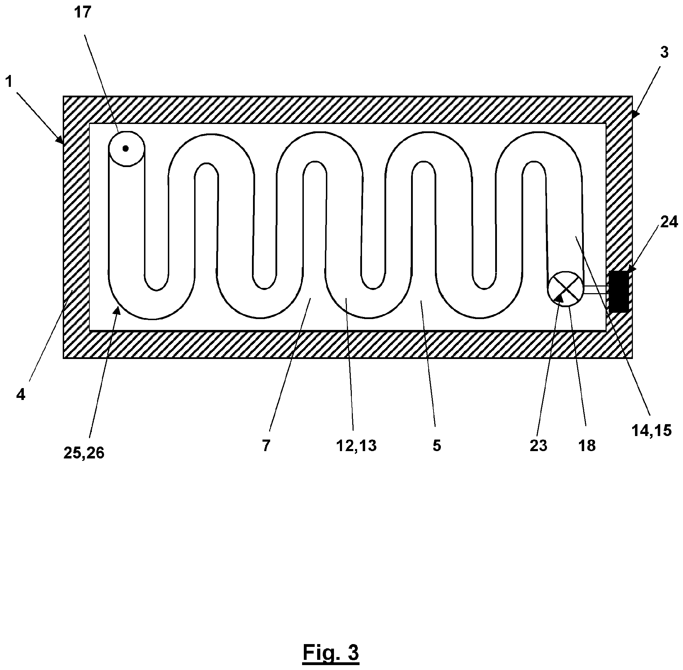

Während Fig. 1 und 2 kammartig ineinander greifende barriereförmige Strömungslenkeinrichtungen 25 zeigen, zeigt **Fig. 3** in einer Fig. 2 entsprechenden Ansicht einer weiteren Ausführungsform der Vorrichtung 1 Strömungslenkeinrichtungen 25 in Form eines mäandernden Kanals 26 in der Außenseite 7 des Wärmeisolationskörpers 5. Dieser Kanal 26 kann aber muss nicht durch das Lichteintrittsfenster 10 nach oben geschlossen sein. Vielmehr kann das Lichteintrittsfenster 10 auch bei dieser Ausführungsform in einem freien Abstand zu der Außenseite 7 des Wärmeisolationskörpers 5 angeordnet sein.

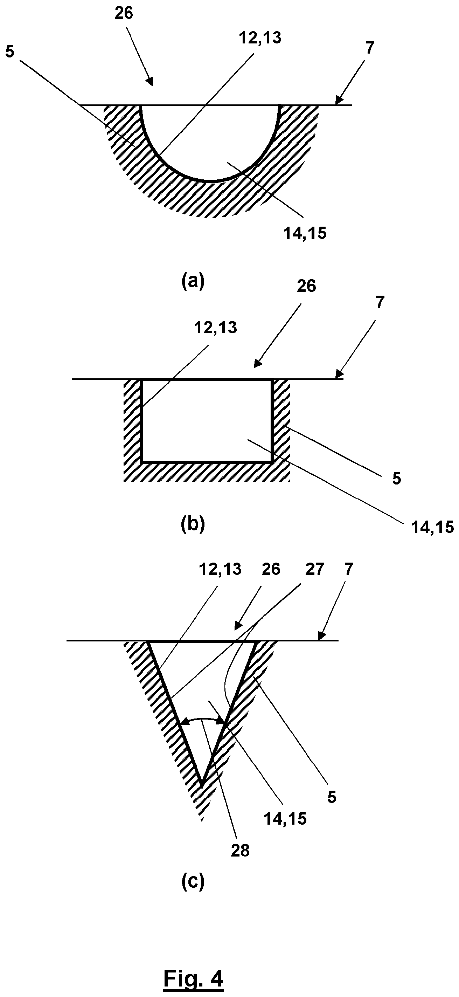

**Fig. 4(a)** bis **(c)** illustriert verschiedene mögliche Querschnitte des Kanals 26 in der Außenseite 7 des Wärmeisolationskörpers 5. Fig. 4(a) zeigt einen am Grund abgerundeten Kanal 26. Fig. 4(b) einen Kanal 26 mit rechteckigem, konkret quadratischem Querschnitt und Fig. 4(c) einen Kanal 26 mit V-förmigem Querschnitt. Dabei sind die den Kanal 26 gemäß Fig. 4(c) begrenzenden Oberflächen 27 unter einem Winkel 28 deutlich kleiner 90°, konkret einem Winkel 28 von hier etwa 60° zueinander ausgerichtet. Auf diese Weise wird von der einen Oberfläche 27 reflektiertes Sonnenlicht tendenziell nicht aus dem Kanal 26 wieder heraus reflektiert, sondern auf die gegenüberliegende Oberfläche 27 gerichtet und dadurch insgesamt mit größerer Wahrscheinlichkeit von dem Lichtabsorptionsmaterial 12 in Wärmeenergie umgewandelt.

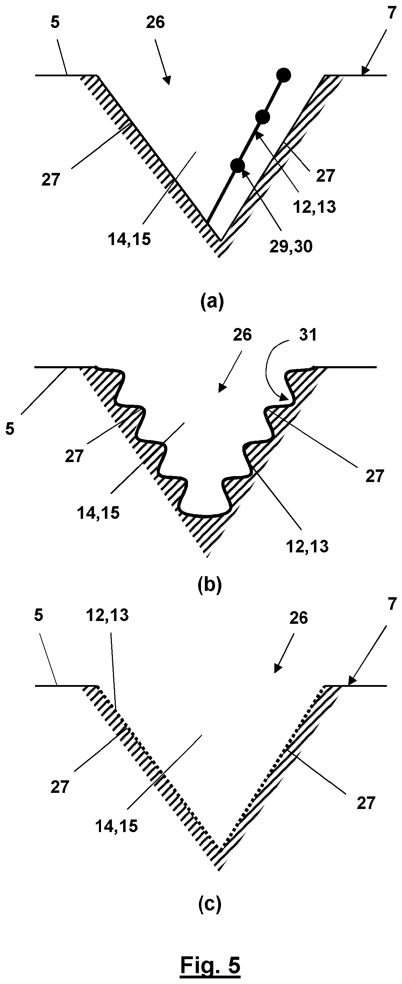

**Fig. 5(a)** bis **(c)** zeigt anhand des Beispiels des V-förmigen Kanals 26 gemäß Fig. 4(c) verschiedene weitere Möglichkeiten, die Umwandlung des einfallenden Sonnenlichts 2 in Wärmeenergie und die Übertragung der Wärmeenergie auf das Wärmeübertragungsgas 14 zu fördern. Gemäß Fig. 5(a) ist in dem Kanal 26 ein mit dem Lichtabsorptionsmaterial 12 beschichtetes oder aus diesem ausgebildetes luftdurchlässiges Gewebe 29, beispielsweise ein Drahtgewebe, als durchströmbarer Strukturkörper 30 angeordnet. Gemäß Fig. 5(b) sind die den freien Querschnitt des Kanals 26 begrenzten Oberflächen 27 mit makroskopischen Oberflächenstrukturen 31 versehen. Gemäß Fig. 5(c) sind die Oberflächen 27 aufgeraut.

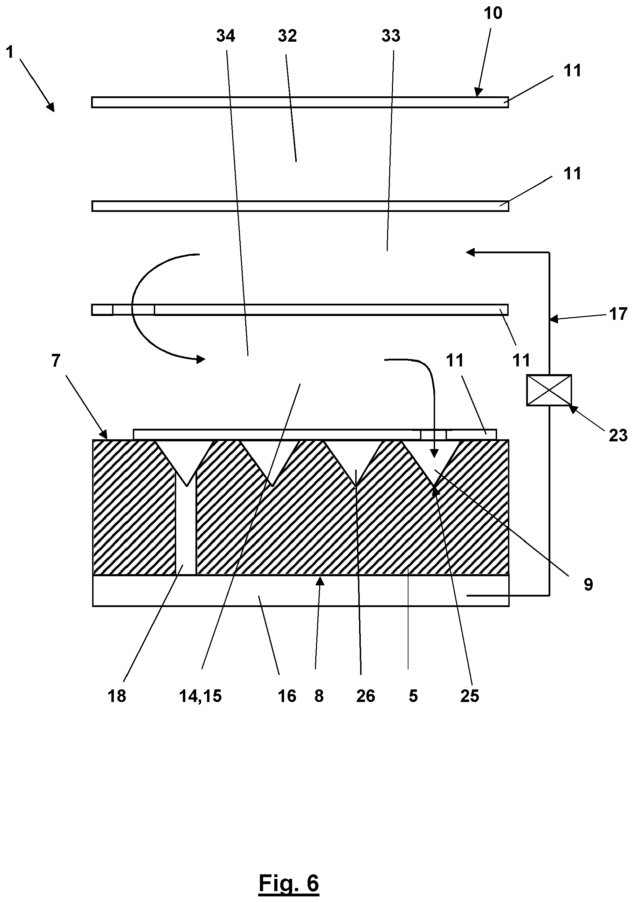

Bei der in **Fig. 6** skizzierten Ausführungsform der erfindungsgemäßen Vorrichtung 1 ist das Lichteintrittsfenster 10 aus mehreren zueinander parallelen und beabstandeten Plexiglasscheiben 11 aufgebaut. Die beiden äußersten Plexiglasscheiben 11 schließen zusammen mit dem hier nicht dargestellten Wärmeisolationsrand 6 einen geschlossenen Wärmeisolationsraum 32 ein. Über einen Freiraum 33 zwischen der von außen zweiten und dritten Plexiglasscheibe und über einen weiteren Freiraum 34 zwischen den beiden innersten Plexiglasscheiben 11 mündet die Kaltgasleitung 17 in die Lichtumwandlungskammer 9 an der Innenseite 7 des Wärmeisolationskörpers 5 ein, und zwar, so dass die Freiräume 33 und 34 gegenläufig über die wesentliche Breite des Lichteintrittsfensters 11 durchströmt werden, bevor das in den Freiräumen 33 und 34 bereits angewärmte Wärmeträgergas 14 in den Kanal 26 der Lichtumwandlungskammer 9 eintritt. Das Gebläse 23 ist hier in der Kaltgasleitung 17 angeordnet und so weniger hohen Temperaturen ausgesetzt als in der Warmgasleitung 18.

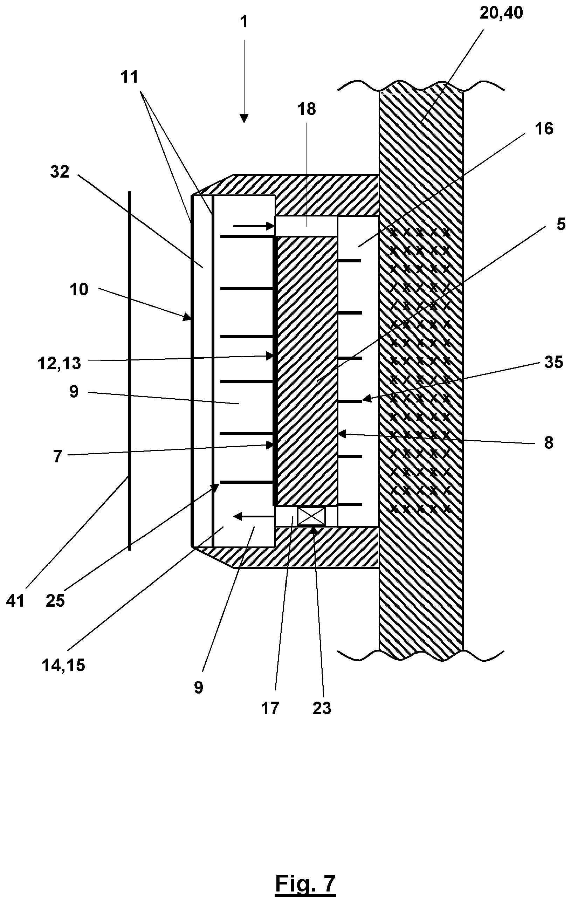

Die Ausführungsform der erfindungsgemäßen Vorrichtung 1 gemäß **Fig. 7**ist zur Erwärmung einer Gebäudewand 40 als festes Wärmeträgermaterial 20 ausgebildet und hängt mit vertikaler Ausrichtung ihres Wärmeisolationskörpers 5 vor der Gebäudewand 40. Dabei kann der Kamineffekt auf Grund der mit zunehmender Temperatur abnehmenden Dichte des Wärmeübertragungsgases 14 genutzt werden, um das Wärmeübertragungsgas 14 durch die an das Lichteintrittsfenster 10 angrenzende Lichtumwandlungskammer 9 und die an die Gebäudewand 40 angrenzende Wärmeübertragungskammer 16 umzuwälzen. Die Vorrichtung 1 gemäß Fig. 7 ist insbesondere zur Erwärmung der Gebäudewand 40 im Winter vorgesehen. Im Sommer kann eine Erwärmung der Gebäudewand 40 unerwünscht sein. Dann kann das Lichteintrittsfenster 10 der Vorrichtung 1, das hier durch zwei, einen Wärmeisolationsraum 32 begrenzende Glasscheiben 11 ausgebildet ist, ganz oder teilweise mit einem ganz oder teilweise lichtundurchlässigen, beispielsweise einem das Sonnenlicht reflektierenden Abdeckelement 41 verschlossen werden.

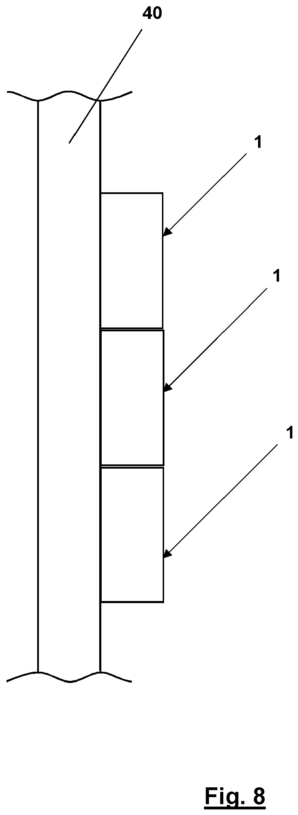

**Fig. 8** illustriert, wie mehrere erfindungsgemäße Vorrichtungen 1 nebeneinander oder übereinander auf der Gebäudewand 40 angeordnet sein können. Dabei können die einzelnen Vorrichtungen 1 lückenlos aneinander angrenzen und so eine großflächige Wärmeisolierung für die Gebäudewand 40 ausbilden.

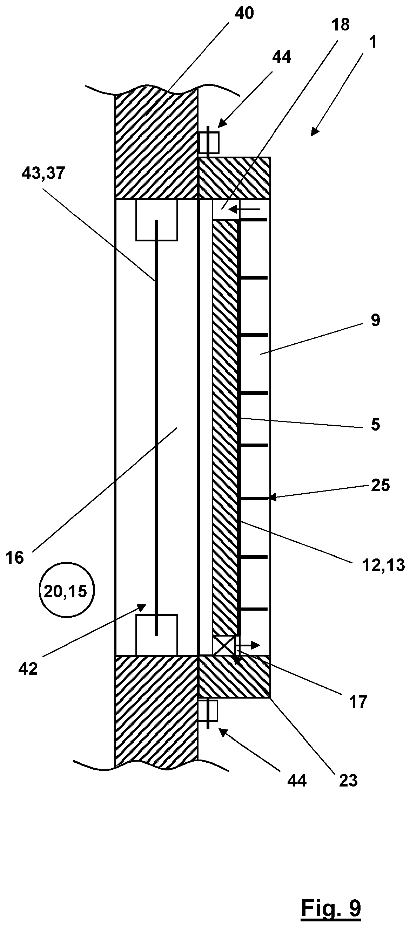

**Fig. 9** zeigt eine Ausführungsform der Vorrichtung 1, die zur Abdeckung eines Fensters 42 in der Gebäudewand 40 vorgesehen ist, um die Wärmeübertragungskammer 16 so auf der Außenseite des Fensters 42 auszubilden, dass dessen Fensterscheibe 43 als Wärmeübertragungswand 37 dient. Als Wärmeträgermedium 20 dient dann die Luft 15 auf der Innenseite der Gebäudewand 40 mit dem Fenster 42. In dieser Ausführungsform sorgt die Vorrichtung 1 für eine Verbesserung der Wärmeisolierung im Bereich des Fensters 42 und führt über das Fenster 42 die aus dem Sonnenlicht gewonnen Wärmeenergie zu. Hiermit ergeben sich bei tiefen Außentemperaturen und schlecht isolierten Fenstern 42 energetische Vorteile gegenüber dem unmittelbaren Eintritt des Sonnenlichts durch die Fensterscheibe 43 und Umwandlung des Sonnenlichts in Wärme hinter der Fensterscheibe 43. Die Vorrichtung gemäß Fig. 9 ist als Ganzes gegenüber Lagersockeln 44 an der Gebäudewand 40 schwenkbar gelagert, um die Vorrichtung 1 von dem Fenster 42 wegschwenken zu können.

### BEZUGSZEICHENLISTE

- 1: Vorrichtung
- 2: Sonnenlicht
- 3: Formkörper
- 4: Hartschaum
- 5: Wärmeisolationskörper
- 6: Wärmeisolationsrand
- 7: Außenseite
- 8: Innenseite
- 9: Lichtumwandlungskammer
- 10: Lichteintrittsfenster
- 11: Plexiglasscheibe
- 12: Lichtabsorptionsmaterial
- 13: Solarlack
- 14: Wärmeübertragungsgas
- 15: Luft
- 16: Wärmeübertragungskammer
- 17: Kaltgasleitung
- 18: Warmgasleitung
- 19: mechanisch temperaturgesteuerte Ventilklappe
- 20: Wärmeträgermedium
- 23: Gebläse
- 24: Solarstromgenerator
- 25: Strömungslenkeinrichtung
- 26: Kanal
- 27: Oberfläche
- 28: Winkel
- 29: Gewebe
- 30: durchströmbarer Strukturkörper
- 31: Oberflächenstruktur
- 32: Wärmeisolationsraum
- 33: Freiraum
- 34: Freiraum
- 35: Strömungslenkeinrichtung
- 40: Gebäudewand
- 41: Abdeckelement
- 42: Fenster
- 43: Fensterscheibe
- 44: Lagersockel

## Patentansprüche

1. Vorrichtung (1) zur Gewinnung von Wärmeenergie aus Sonnenlicht (2), wobei die Vorrichtung (1) in ihrem aktivierten Zustand aufweist:
- einen flächigen Wärmeisolationskörper (5),
- eine zwischen einem Lichteintrittsfenster (10) und einer Außenseite (7) des flächigen Wärmeisolationskörpers (5) ausgebildete Lichtumwandlungskammer (9), in der ein Lichtabsorptionsmaterial (12) angeordnet ist, das Sonnenlicht (2), welches durch das Lichteintrittsfenster (10) in die Lichtumwandlungskammer (9) eintritt, in Wärmeenergie umwandelt,
- eine Gasführungseinrichtung für ein Wärmeübertragungsgas (14), die eine in die Lichtumwandlungskammer (9) einmündende Kaltgasleitung (17) und eine aus der Lichtumwandlungskammer (9) ausmündende Warmgasleitung (18) umfasst, wobei das Wärmeübertragungsgas (14) in der Lichtumwandlungskammer (9) die Wärmeenergie von dem Lichtabsorptionsmaterial (12) aufnimmt und wobei sich die Kaltgasleitung (17) und die Warmgasleitung (18) durch den flächigen Wärmeisolationskörper (5) oder an diesem vorbei erstrecken,
- eine Wärmeübertragungskammer (16) auf der Innenseite (8) des flächigen Wärmeisolationskörpers (5), die zwischen die Warmgasleitung (18) und die Kaltgasleitung (17) geschaltet ist und die direkt an ein externes Wärmeträgermedium (20) anschließbar ist, wobei die Wärmeübertragungskammer (16) zu dem Wärmeträgermedium (20) hin offen ist, wobei das Wärmeübertragungsgas (14) in der Wärmeübertragungskammer (16) Wärmeenergie direkt an das Wärmeträgermedium (20) abgibt, und wobei der Wärmeisolationskörper (5) das Wärmeträgermedium (20) thermisch nach außen isoliert,
- einen Wärmeisolationsrand (6), der den flächigen Wärmeisolationskörper (5), die Lichtumwandlungskammer (9), die Kaltgasleitung (17), die Warmgasleitung (18) und die Wärmeübertragungskammer (16) seitlich einfasst und der dazu ausgebildet ist, an einer Oberfläche von festem Wärmeträgermedium (20) an- oder aufzuliegen,
**dadurch gekennzeichnet,**
- **dass** in der Lichtumwandlungskammer (9) Strömungslenkeinrichtungen (25) angeordnet sind, die den Strömungsweg zwischen der Kaltgasleitung (17) und der Warmgasleitung (18) verlängern,
- wobei die Strömungslenkeinrichtungen (25) die Lichtumwandlungskammer (9) längs des Wärmeisolationskörpers (5) und/oder quer dazu unterteilen, und
- **dass** ein Gebläse (23) in der Kaltgasleitung (17) und/oder der Warmgasleitung (18) angeordnet ist.

2. Vorrichtung (1) nach Anspruch 1, **gekennzeichnet durch** einen Solarstromgenerator (24), der das Gebläse (23) mit elektrischer Energie versorgt.

3. Vorrichtung (1) nach Anspruch 2, **dadurch gekennzeichnet, dass** der Solarstromgenerator (24) genau dann ausreichend Energie zum Betrieb des Gebläses (23) bereitstellt, wenn so viel Sonnenlicht auf ihn und in die Lichtumwandlungskammer (9) einfällt, dass in der Lichtumwandlungskammer (9) ausreichend Wärmeenergie zum Übertragen auf das Wärmeträgermedium (20) anfällt.

4. Vorrichtung (1) nach einem der vorhergehenden Ansprüche, **dadurch gekennzeichnet, dass** die in der Lichtumwandlungskammer (9) angeordneten Strömungslenkeinrichtungen (25) den über das Lichtabsorptionsmaterial (12) führenden Strömungsweg zwischen der Kaltgasleitung (17) und der Warmgasleitung (18) verlängern.

5. Vorrichtung (1) nach einem der vorhergehenden Ansprüche, **dadurch gekennzeichnet, dass** in der Wärmeübertragungskammer (16) Strömungslenkeinrichtungen (25) angeordnet sind, die den über das Wärmeträgermedium (20) führenden Strömungsweg zwischen der Warmgasleitung (18) und der Kaltgasleitung (17) verlängern.

6. Vorrichtung (1) nach einem der vorhergehenden Ansprüche, **dadurch gekennzeichnet, dass** der Wärmeisolationskörper (5), das Lichteintrittsfenster (10), die Lichtumwandlungskammer (9), die Gasführungseinrichtung und die Wärmeübertragungskammer (16) als Einheit verschwenkbar an einem Lagersockel (44) der Vorrichtung (1) gelagert sind, um die Wärmeübertragungskammer (16) von dem Wärmeträgermedium (20) weg zu schwenken.

7. Vorrichtung (1) nach einem der vorhergehenden Ansprüche, **dadurch gekennzeichnet, dass** der Wärmeisolationskörper (5) und der Wärmeisolationsrand (6) ausgebildet sind mit
- formstabilen Schäumen und/oder
- Gaskammern mit formstabilen Kammerwänden.

8. Vorrichtung (1) nach einem der vorhergehenden Ansprüche, **dadurch gekennzeichnet, dass** der Wärmeisolationskörper (5) zwischen der Lichtumwandlungskammer (9) und der Wärmeübertragungskammer (16) eine Isolationsdicke von mindestens 3 cm, vorzugsweise von mindestens 5 cm, aufweist.

9. Vorrichtung (1) nach einem der vorhergehenden Ansprüche, **dadurch gekennzeichnet, dass** eine Ventilklappe in der Kaltgasleitung (17) und/oder der Warmgasleitung (18) angeordnet ist, wobei die Ventilklappe eine mechanisch temperaturgesteuerte Ventilklappe (19) ist.

10. Vorrichtung (1) nach einem der vorhergehenden Ansprüche, **dadurch gekennzeichnet, dass** Lichteintrittsfenster (10) in dem aktivierten Zustand der Vorrichtung (1) mehrere parallel zueinander ausgerichtete und quer zu dem Wärmeisolationskörper (5) voneinander beabstandete Schichten aufweist.

11. Vorrichtung (1) nach Anspruch 10, **dadurch gekennzeichnet, dass** die Kaltgasleitung (17) über einen zwischen zwei der Schichten verbleibenden ersten Freiraum (33) in die Lichtumwandlungskammer (9) einmündet, wobei die Kaltgasleitung (17) optional über einen zwischen zwei der Schichten verbleibenden zweiter Freiraum (34), der räumlich zwischen dem ersten Freiraum (33) und der Lichtumwandlungskammer (9) angeordnet ist, von dem ersten Freiraum (33) in die Lichtumwandlungskammer (9) einmündet.

12. Vorrichtung (1) nach einem der vorhergehenden Ansprüche, **dadurch gekennzeichnet, dass** ein Abdeckelement (41) vorhanden ist, mit dem das Lichteintrittsfenster (10) zumindest teilweise abdeck- oder verschließbar ist.

13. Vorrichtung (1) nach einem der vorhergehenden Ansprüche, **dadurch gekennzeichnet, dass** überströmbare Oberflächenstrukturen (31) oder durchströmbare Strukturkörper (30) in der Lichtumwandlungskammer (9) angeordnet sind, die das Lichtabsorptionsmaterial (12) an ihren Oberflächen (27) aufweisen.

14. Vorrichtung (1) nach Anspruch 13, **dadurch gekennzeichnet, dass** einander benachbarte Oberflächen (27) der überströmbaren Oberflächenstrukturen (31) oder durchströmbaren Strukturkörper (30) in der Lichtumwandlungskammer (9) unter Winkeln (28) von kleinergleich 90° zueinander ausgerichtet sind.

15. Verwendung der Vorrichtung (1) nach einem der vorhergehenden Ansprüche, **dadurch gekennzeichnet, dass** die Vorrichtung auf einen Fußboden im Außenbereich als das feste Wärmeträgermedium (20) aufgelegt wird, wobei der Fußboden nach Entfernen der Vorrichtung (1) die auf ihn übertragene Wärmeenergie nach Art einer Fußbodenheizung abgibt.

## Claims

1. Apparatus (1) for recovering thermal energy from sunlight (2), the apparatus (1) comprising in its activated state:
- an areal thermal insulation body (5),
- a light conversion chamber (9), which is formed between a light entry window (10) and an outer side (7) of the areal thermal insulation body (5) and in which a light absorption material (12) is arranged, that converts sunlight (2), which enters the light conversion chamber (9) through the light entry window (10), into thermal energy,
- a gas guiding device for a heat transfer gas (14), which comprises a cold gas line (17) opening into the light conversion chamber (9) and a hot gas line (18) opening out of the light conversion chamber (9), wherein the heat transfer gas (14) in the light conversion chamber (9) takes up the thermal energy from the light absorption material (12) and wherein the cold gas line (17) and the hot gas line (18) extend through or past the areal heat insulation body (5),
- a heat transfer chamber (16) on the inside (8) of the areal heat insulation body (5), which is connected between the hot gas line (18) and the cold gas line (17) and which can be connected directly to an external heat carrier medium (20), wherein the heat transfer chamber (16) is open towards the heat carrier medium (20), wherein the heat transfer gas (14) in the heat transfer chamber (16) transfers heat energy directly to the heat carrier medium (20), and wherein the heat insulation body (5) thermally insulates the heat carrier medium (20) towards the outside,
- a thermal insulation rim (6) which laterally surrounds the areal thermal insulation body (5), the light conversion chamber (9), the cold gas line (17), the hot gas line (18) and the heat transfer chamber (16) and which is configured to rest against or on a surface of solid heat carrier medium (20),
**characterized in**
- **that** flow guiding devices (25) are arranged in the light conversion chamber (9), which extend the flow path between the cold gas line (17) and the hot gas line (18),
- wherein the flow guiding devices (25) subdivide the light conversion chamber (9) along the thermal insulation body (5) and/or transversely thereto, and
- a blower (23) is arranged in the cold gas line (17) and/or the hot gas line (18).

2. Apparatus (1) according to claim 1, **characterized by** a solar power generator (24) which supplies the blower (23) with electrical energy.

3. Apparatus (1) according to claim 2, **characterized in that** the solar power generator (24) provides sufficient energy for operating the blower (23) precisely when so much sunlight falls on it and into the light conversion chamber (9) that sufficient thermal energy is generated in the light conversion chamber (9) for transferring it to the heat carrier medium (20).

4. Apparatus (1) according to any of the preceding claims, **characterized in that** the flow guiding devices (25) arranged in the light conversion chamber (9) extend the flow path, which leads across the light absorption material (12), between the cold gas line (17) and the hot gas line (18).

5. Apparatus (1) according to any of the preceding claims, **characterized in that** flow guiding devices (25) are arranged in the heat transfer chamber (16), which extend the flow path, which leads across the light carrier medium (20), between the hot gas line (18) and the cold gas line (17).

6. Apparatus (1) according to any of the preceding claims, **characterized in that** the thermal insulation body (5), the light inlet window (10), the light conversion chamber (9), the gas guiding device and the heat transfer chamber (16) are pivotably mounted as a unit on a bearing base (44) of the apparatus (1) in order to pivot the heat transfer chamber (16) away from the heat carrier medium (20).

7. Apparatus (1) according to any of the preceding claims, **characterized in that** the thermal insulation body (5) and the thermal insulation rim (6) are formed with
- dimensionally stable foams and/or
- gas chambers having dimensionally stable chamber walls.

8. Apparatus (1) according to any of the preceding claims, **characterized in that** the thermal insulation body (5) has an insulation thickness of at least 3 cm, preferably of at least 5 cm, between the light conversion chamber (9) and the heat transfer chamber (16).

9. Apparatus (1) according to any of the preceding claims, **characterized in that** a valve flap is arranged in the cold gas line (17) and/or the hot gas line (18), the valve flap being a mechanically temperature-controlled valve flap (19).

10. Apparatus (1) according to any of the preceding claims, **characterized in that**, in the activated state of the apparatus (1), the light entry window (10) has a plurality of layers aligned parallel to one another and spaced apart from one another transversely to the thermal insulation body (5).

11. Apparatus (1) according to claim 10, **characterized in that** the cold gas line (17) opens into the light conversion chamber (9) via a first free space (33) remaining between two of the layers, the cold gas line (17) optionally opening into the light conversion chamber (9) from the first free space (33) via a second free space (34) remaining between two of the layers, which is spatially arranged between the first free space (33) and the light conversion chamber (9).

12. Apparatus (1) according to any of the preceding claims, **characterized in that** a cover element (41) is provided, with which the light inlet window (10) can be at least partially covered or closed.

13. Apparatus (1) according to any of the preceding claims, **characterized in that** overflowable surface structures (31) or flow-through structural bodies (30) are arranged in the light conversion chamber (9), which have the light absorption material (12) on their surfaces (27).

14. Apparatus (1) according to claim 13, **characterized in that** adjacent surfaces (27) of the overflowable surface structures (31) or flowable structural bodies (30) in the light conversion chamber (9) are aligned with one another at angles (28) of less than or equal to 90°.

15. Use of the apparatus (1) according to any of the preceding claims, **characterized in that** the apparatus is placed on an outdoor floor as the solid heat carrier medium (20), the floor, after removal of the apparatus (1), emitting the thermal energy transferred to it in the manner of a floor heating.

## Revendications

1. Dispositif (1) de récupération d'énergie thermique à partir de la lumière solaire (2), le dispositif (1) présentant dans son état activé :
- un corps d'isolation thermique plat (5),
- une chambre de conversion de lumière (9) formée entre une fenêtre d'entrée de lumière (10) et une face extérieure (7) du corps d'isolation thermique plat (5), dans laquelle est disposé un matériau d'absorption de lumière (12) qui convertit en énergie thermique la lumière solaire (2) entrant dans la chambre de conversion de lumière (9) à travers la fenêtre d'entrée de lumière (10),
- un dispositif de guidage de gaz pour un gaz de transfert de chaleur (14), comprenant une conduite de gaz froid (17) débouchant dans la chambre de conversion de lumière (9) et une conduite de gaz chaud (18) débouchant hors de la chambre de conversion de lumière (9), dans lequel le gaz de transfert de chaleur (14) absorbe l'énergie thermique du matériau d'absorption de lumière (12) dans la chambre de conversion de lumière (9), et la conduite de gaz froid (17) et la conduite de gaz chaud (18) s'étendent à travers le corps d'isolation thermique plat (5) ou en passant à côté de celui-ci,
- une chambre de transfert de chaleur (16) sur la face intérieure (8) du corps d'isolation thermique plat (5), qui est connectée entre la conduite de gaz chaud (18) et la conduite de gaz froid (17) et qui peut être directement raccordée à un milieu caloporteur externe (20), dans lequel la chambre de transfert de chaleur (16) est ouverte vers le milieu caloporteur (20), dans lequel le gaz de transfert de chaleur (14) transfère l'énergie thermique directement au milieu caloporteur (20) dans la chambre de transfert de chaleur (16), et dans lequel le corps d'isolation thermique (5) isole thermiquement le milieu caloporteur (20) vers l'extérieur,
- un bord d'isolation thermique (6) qui encadre latéralement le corps d'isolation thermique plat (5), la chambre de conversion de lumière (9), la conduite de gaz froid (17), la conduite de gaz chaud (18) et la chambre de transfert de chaleur (16) et qui est conçu pour reposer sur ou contre une surface du milieu caloporteur solide (20), **caractérisé en ce que**
- des dispositifs de déviation de flux (25) sont disposés dans la chambre de conversion de lumière (9), qui allongent le trajet d'écoulement entre la conduite de gaz froid (17) et la conduite de gaz chaud (18),
- les dispositifs de déviation de flux (25) subdivisent la chambre de conversion de lumière (9) le long du corps d'isolation thermique (5) et/ou transversalement par rapport à celui-ci, et
- un ventilateur (23) est disposé dans la conduite de gaz froid (17) et/ou la conduite de gaz chaud (18).

2. Dispositif (1) selon la revendication 1, **caractérisé par** un générateur d'énergie solaire (24) qui alimente le ventilateur (23) en énergie électrique.

3. Dispositif (1) selon la revendication 2, **caractérisé en ce que** le générateur d'énergie solaire (24) fournit une quantité d'énergie suffisante pour le fonctionnement du ventilateur (23) exactement lorsque suffisamment de lumière solaire l'atteint et pénètre dans la chambre de conversion de lumière (9) afin qu'une quantité suffisante d'énergie thermique soit générée dans la chambre de conversion de lumière (9) pour être transférée au milieu caloporteur (20).

4. Dispositif (1) selon l'une des revendications précédentes, **caractérisé en ce que** les dispositifs de déviation de flux (25) disposés dans la chambre de conversion de lumière (9) allongent le trajet d'écoulement passant au-dessus du matériau d'absorption de lumière (12) entre la conduite de gaz froid (17) et la conduite de gaz chaud (18).

5. Dispositif (1) selon l'une des revendications précédentes, **caractérisé en ce que** des dispositifs de déviation de flux (25) sont disposés dans la chambre de transfert de chaleur (16), qui allongent le trajet d'écoulement passant au-dessus du milieu caloporteur (20) entre la conduite de gaz chaud (18) et la conduite de gaz froid (17).

6. Dispositif (1) selon l'une des revendications précédentes, **caractérisé en ce que** le corps d'isolation thermique (5), la fenêtre d'entrée de lumière (10), la chambre de conversion de lumière (9), le dispositif de guidage de gaz et la chambre de transfert de chaleur (16) sont montés pivotant comme une unité sur un socle de palier (44) du dispositif (1) afin de faire pivoter la chambre de transfert de chaleur (16) à l'écart du milieu caloporteur (20).

7. Dispositif (1) selon l'une des revendications précédentes, **caractérisé en ce que** le corps d'isolation thermique (5) et le bord d'isolation thermique (6) sont réalisés avec
- des mousses indéformables et/ou
- des chambres de gaz avec des parois de chambre indéformables.

8. Dispositif (1) selon l'une des revendications précédentes, **caractérisé en ce que** le corps d'isolation thermique (5) présente une épaisseur d'isolation d'au moins 3 cm, de préférence d'au moins 5 cm, entre la chambre de conversion de lumière (9) et la chambre de transfert de chaleur (16).

9. Dispositif (1) selon l'une des revendications précédentes, **caractérisé en ce qu'**un clapet de soupape est disposé dans la conduite de gaz froid (17) et/ou la conduite de gaz chaud (18), le clapet de soupape étant un clapet de soupape à commande thermique mécanique (19).

10. Dispositif (1) selon l'une des revendications précédentes, **caractérisé en ce que** la fenêtre d'entrée de lumière (10) présente, dans l'état activé du dispositif (1), plusieurs couches parallèles entre elles et espacées les unes des autres transversalement au corps d'isolation thermique (5).

11. Dispositif (1) selon la revendication 10, **caractérisé en ce que** la conduite de gaz froid (17) débouche dans la chambre de conversion de lumière (9) via un premier espace libre (33) restant entre deux des couches, la conduite de gaz froid (17) débouchant facultativement du premier espace libre (33) dans la chambre de conversion de lumière (9) via un deuxième espace libre (34) restant entre deux des couches, qui est disposé spatialement entre le premier espace libre (33) et la chambre de conversion de lumière (9).

12. Dispositif (1) selon l'une des revendications précédentes, **caractérisé en ce qu'**un élément de recouvrement (41) est présent, avec lequel la fenêtre d'entrée de lumière (10) peut être au moins partiellement recouverte ou fermée.

13. Dispositif (1) selon l'une des revendications précédentes, **caractérisé en ce que**, dans la chambre de conversion de lumière (9), sont disposés des structures de surface traversables par le flux (31) ou des corps structurés pouvant être traversés par le flux (30) qui présentent le matériau d'absorption de lumière (12) sur leurs surfaces (27).

14. Dispositif (1) selon la revendication 13, **caractérisé en ce que** des surfaces (27) adjacentes les unes aux autres des structures de surface traversables par le flux (31) ou des corps structurés traversables par le flux (30) dans la chambre de conversion de lumière (9) sont orientées les unes par rapport aux autres selon des angles (28) inférieurs ou égaux à 90°.

15. Utilisation du dispositif (1) selon l'une des revendications précédentes, **caractérisée en ce que** le dispositif est posé sur un sol à l'extérieur comme milieu caloporteur solide (20), le sol restituant, après le retrait du dispositif (1), l'énergie thermique qui lui a été transférée à la manière d'un chauffage au sol.
